# EUROPEAN PATENT SPECIFICATION

(11) **EP 1 693 277 B1**
(45) Date of publication and mention of the grant of the patent: **26.09.2012**
(21) Application number: 06075389.4
(22) Date of filing: 17.02.2006
(51) Int. Cl.: B62B 9/22, B62B 7/14, B60N 2/28

(54) **A stroller as well as a connecting piece**
Kinderwagen und Verbindungsstück
Poussette et pièce de raccordement

(30) Priority: 18.02.2005 NL 1028346
(43) Date of publication of application: 23.08.2006
(73) Proprietor: Maxi Miliaan B.V., 5704 RD Helmond (NL)
(72) Inventor: Karremans, Taco, 5615 AH Eindhoven (NL); Jacobs, Imre Pieter, 3572 ET Utrecht (NL)
(74) Representative: Veldman-Dijkers, Cornelia G. C.

(56) References cited:
- FR-A- 1 148 455
- FR-A1- 2 487 765
- GB-A- 421 007
- GB-A- 623 245
- GB-A- 2 313 576
- US-A- 3 883 149

## Description

The invention relates to a stroller comprising a frame supported by wheels and a seat supported by the frame, the seat is connected to the frame by means of a connecting piece with first spring means being provided in the connecting piece, wherein the seat is movable with respect to the frame against the spring force of the first spring means, whilst the frame is movable with respect to the wheels against the spring force of second spring means, the joint effective spring constant of the first spring means between the seat and the frame being smaller than the joint effective spring constant of the second spring means between the frame and the wheels.

The invention also relates to a connecting piece suitable for use in such a stroller.

In such a stroller known from GB2313576A a shock absorbing device forms first spring means whilst the frame is movable with respect to the wheels against the spring force of second spring means.

When the stroller is driven over an even surface, acceleration forces are exerted on the child. Due to the first and second spring means part of the shocks are absorbed when the stroller is in motion.

A disadvantage of the known stroller is that the joint effective spring constant of the two spring means can not optimized for transporting babies having a weight of 4-11 kg, maximally about 15 kg, as well as toddlers and infants, who will normally have a weight of 15-25 kg so that still acceleration forces are exerted on the child.

This is undesirable, in particular in the case of babies, whilst toddlers and infants experience these forces as unpleasant.

The object of the invention is to provide a stroller exhibiting an improved driving comfort both for babies and for toddlers and infants.

This object is accomplished with the stroller according to the invention in that the connecting piece is detachably connected to the frame

Since the connecting piece is detachably connected to the frame, it is possible to connect the seat that is used for transporting babies to the frame by using first spring means having a spring constant smaller than that of the first spring means used with the seat that is used for transporting toddlers or infants. Babies are usually transported in a substantially horizontal position in the seat, or in a so-called bucket. For toddlers and infants, on the other hand, a seat in which the child can sit substantially straight up is used more often. As a result of the presence of first spring means with a desired joint effective spring constant between the seat and the frame, the seat will slightly move with respect to the frame when the stroller is driven over an uneven surface, as a result of which the forces that are exerted on the child will be relatively limited. In this way an improved driving comfort is achieved.

The use of different spring constants for the spring means between the seat and the frame makes it possible to adapt the spring constant to the weight and the centre of gravity of the child to be accommodated in the seat. In this connection it is possible, for example, to select the first spring means for the baby seat such that an adequate spring action is obtained with a weight of 4 - 11 kg, whilst the first spring means will be fully compressed in the case of the load of 15 kg, for example. In the case of a seat that is suitable for transporting toddlers or infants, on the other hand, first spring means will be used that will be hardly compressed in the case of a load of 4 - 11 kg, whilst an adequate spring action is only obtained with a load of 15-25 kg.

Since the frame is also movable with respect to the wheels against the spring force of second spring means, the spring action between the seat and the wheels is further optimised.

When such a stroller is used for transporting babies, with spring means being present between the seat and the frame and also between the frame and the wheels, an optimum spring action is obtained. When the seat is detached and exchanged for a seat suitable for toddlers or infants, no spring means need to be provided between the seat and the frame, if desired, because the spring means between the frame and wheels can suffice for providing an adequate spring action in that case.

It is noted that a stroller comprising spring means for absorbing acceleration forces that occur when the stroller is driven over an uneven surface is known from GB-A-421,007.

When the stroller that is known from said British document is stationary, it is possible to cause the stroller to rock relative to the frame, making use of additional spring means. The stroller is not suitable for transporting babies as well as toddlers.

One embodiment of the stroller according to the invention is characterized in that the seat is connected to the frame by means of a parallelogram-like construction, which parallelogram-like construction is capable of deformation against the spring force of the spring means.

The use of a parallelogram-like construction makes it possible to ensure that a solid connection between the seat and the frame is obtained in a simple manner, whilst at the same time the spring means enable movement of the seat relative to the frame.

Yet another embodiment of the stroller according to the invention is characterized in that the connecting piece is detachably connected to the seat.

This makes it possible to connect the seat to the frame with or without the use of spring means, depending on the user's requirements. In addition, it is possible in this manner to use the connecting piece by strollers that are already on the market, which were so far used without spring means being provided between the seat and the frame.

The invention also relates to a connecting piece that is characterized in that the connecting piece comprises a first part, which can be connected to the seat, as well as a second part, which can be connected to the frame, which parts are movable with respect to each other against the spring force of spring means.

The use of such a connecting this makes it possible to provide a seat that can be detachably connected to a frame with spring means between the seat and the frame.

The invention will now be explained in more detail with reference to the drawing, in which:
Figure 1 is a perspective view of a stroller according to the invention;
Figure 2 is a perspective view of the stroller that is shown in figure 1, from which the seat has been removed;
Figure 3 is a perspective view of a connecting piece of the stroller that is shown in figures 1 and 2;
Figure 4 is a side view of the connecting piece that is shown in figure 3;
Figures 5A-7B show various embodiments of a connecting piece according to the invention.

Like parts are indicated by the same numerals in the figures.

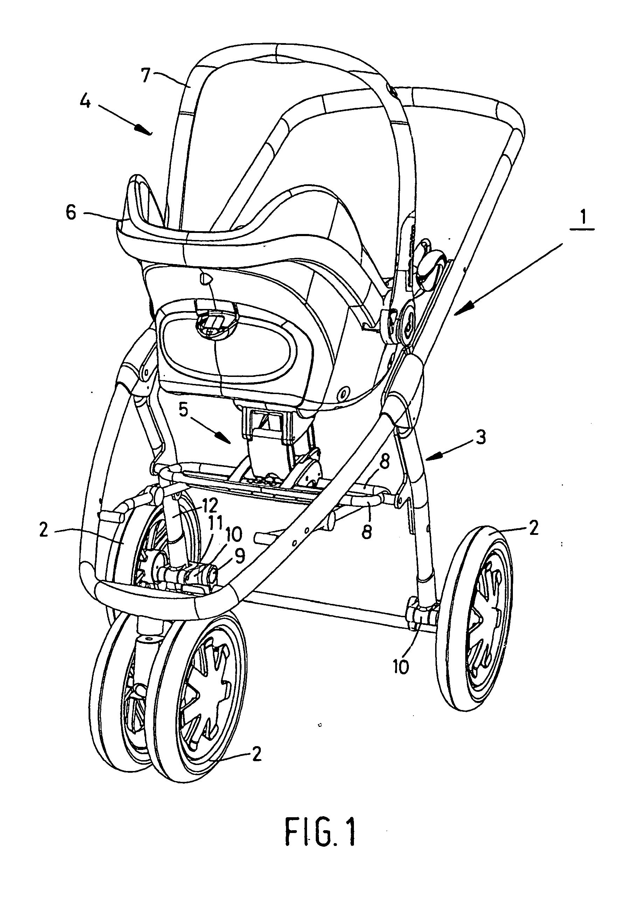

Figure 1 shows a stroller 1 according to the invention, which comprises a frame 3 supported by wheels 2 as well as a seat bucket 4, which is connected to the frame 3 by means of a connecting piece 5. The seat bucket 4 is known per se and is provided with a seat 6 and a carrying handle 7 that is pivotally connected thereto. On a side remote from the carrying handle 7, the seat 6 is provided with means for effecting a detachable connection with the connecting piece 5. On a side remote from the seat 6, the connecting piece 5 is provided with means for effecting a detachable connection with rods 8 of the frame 3. The frame 3 is supported by two rear wheels 2 and a front wheel 2. The rear wheels 2 are rotatable about axes of rotation 9 in bearing blocks 10. The bearing blocks 10 are pivotally connected to rear legs 12 of the frame 3 about pivot pins 11. Second spring means are provided between each bearing block 10 and the associated rear leg 12, with the bearing block 10 being pivotable with respect to the associated rear leg 12, together with the associated rear wheel 2, against the spring force of said second spring means.

Second spring means are also present between the front wheel 2 and the frame 3, as a result of which the front wheel 2 and the frame 3 are movable with respect to each other against the spring force of said second spring means.

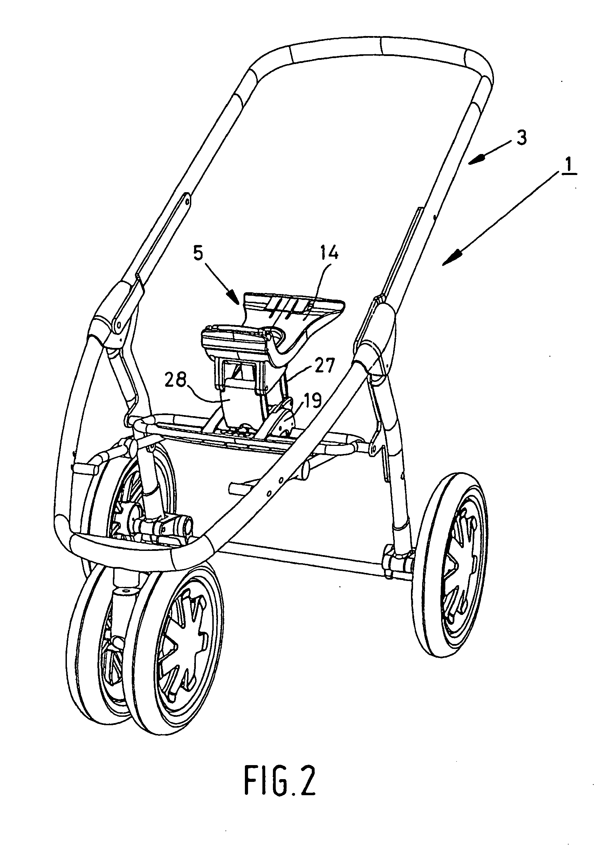

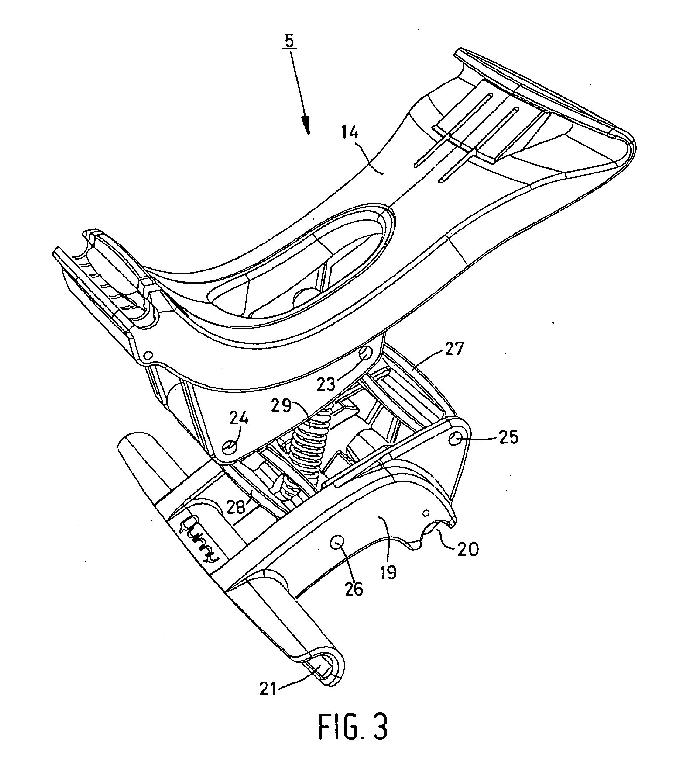

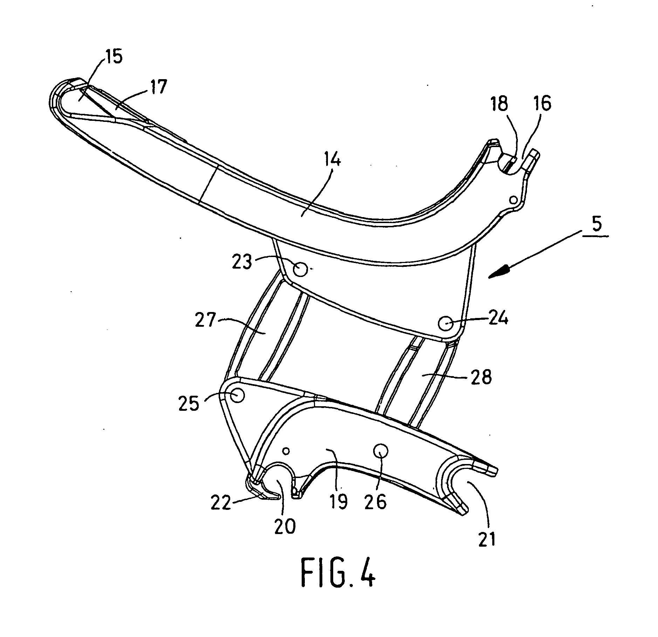

Figure 2 is a perspective view of the stroller 1 that is shown in figure 1, in which the seat bucket 4 is shown to be disconnected from the connecting piece 5. The connecting piece 5 will be explained in more detail with reference to figures 3 and 4. Said figures show a perspective view and a side view respectively of the connecting piece 5 that has been disconnected from the frame 3.

The connecting piece 5 comprises a first part 14, which is provided at both ends 15, 16 with recesses in which rods (not shown) connected to the seat bucket 4 can be positioned, which rods can subsequently be locked in position in the recesses by means of locking lips 17, 18. Such a locked connection of a seat bucket by means of a part that supports the seat bucket is known per se and will not be further explained herein, therefore.

The connecting piece 5 furthermore comprises a second part 19, which is provided at ends 20, 21 with recesses that can be placed over the rods 8 of the frame 3. The second part 19 can subsequently locked in position with respect to the frame 3 with the aid of locking means 22. It is known per se to detachably connect and lock a part to a frame 3, and consequently this will not be further discussed herein.

Double arms 27, 28 extend between pivot pins 23, 24 that are connected to the first part and pivot pins 25, 26 that are connected to the second part 19. The arms 27, 28 preferably have the same length. The spacing between the pivot pins 23, 24 corresponds to the spacing between the pivot pins 25, 26. A spring 29 forming first spring means is positioned between the pivot pin 23 that is connected to the first part 14 and the pivot pin 26 that is connected to the second part 19. The spring 29 keeps the first part 14 in the position that is shown in figures 3 and 4 with respect to the second part 19.

The spring constant of the spring 29 that is positioned in the connecting piece 5 is smaller than the joint effective spring constant of the springs positioned between the frame 3 and the wheels 2.

When the connecting piece 5 is used in the stroller 1 that is shown in figure 1, forces will be exerted on the stroller 1 when the stroller 1 is being driven over an uneven surface. Said forces are transferred to the frame 3 via the wheels 2 and, via the connecting piece 5, to the seat bucket 4. As a result of the relatively low spring constant of the spring 29 in the connecting piece 5, the spring 29 will be compressed already when a relatively small force is exerted thereon, resulting in pivoting of the arms 27, 28 of the connecting piece 5 and movement of the first part 14 in the direction of the second part 19. A baby who is present in the seat bucket 4 will experience such springing as comfortable.

When the stroller 1 is to be used for transporting a toddler or an infant, the seat bucket 4 will be removed from the frame 3 together with the connecting piece 5, after which a seat that is suitable for a toddler or an infant will be connected to the frame 3. If the connecting piece 5 and the spring 29 present therein would be used, the toddler or the infant, who weighs about 15 - 25 kg, would fully compress the spring 29, causing the first part 14 and the second part 19 to abut against each other. In such a case the connecting piece 5 would not provide any spring action at all anymore. When the toddler or the infant is being transported over an unevenness in the road surface, spring action is provided by the springs positioned between the frame 3 and the wheels 2.

It will be apparent that the connecting piece 5 is suitable for any stroller 1 in which a seat bucket can be detachably connected to a frame 3. Of course the parts 14, 19 must be so configured that they can be connected and locked to and disconnected from the seat bucket 4 and the frame 3, respectively, in a simple manner.

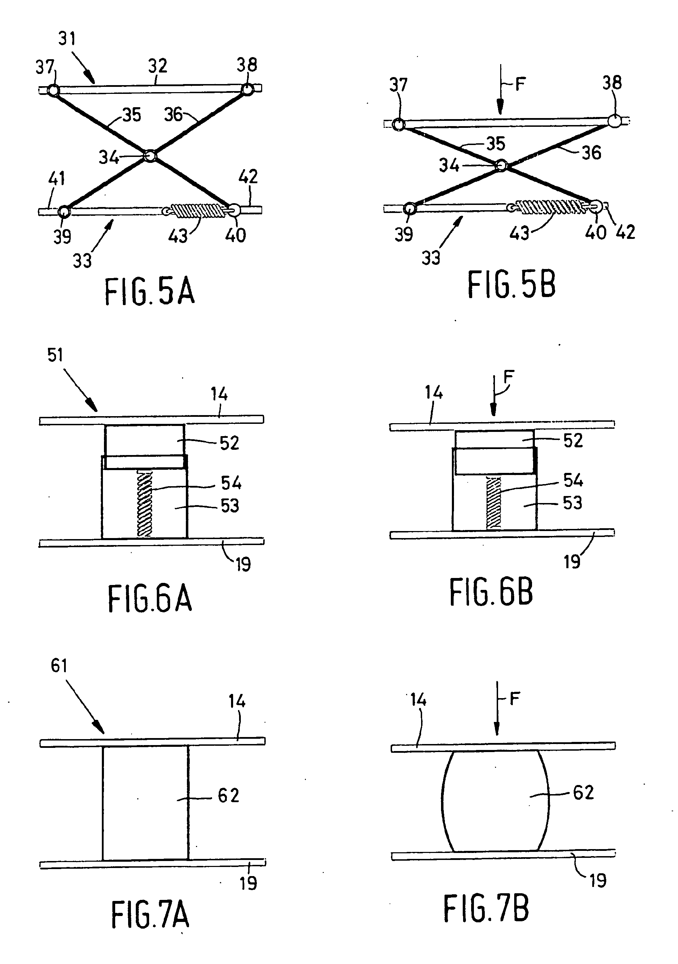

Figures 5A and 5B show another embodiment of a connecting piece 31 according to the invention, which comprises a first part 32 connected to a seat and a second part 33 connected to the frame. The connecting piece 31 is provided with two arms 35, 36 which are pivotally interconnected by means of a pivot pin 34, said arms being pivotally connected to the first part 32 and the second part 33 about pivot pins 37, 38, 39, 40 at their ends remote from the pivot pin 34. The first part 32 can telescope between the pivot pins 37, 38 in a manner that is known per se. The second part 33 comprises a first segment 41, which supports the pivot pin 39, and a second segment 42, which supports the pivot pin 14. The segment 41, 42 are interconnected by means of a tension spring 43 forming first spring means. When a force F is exerted on the connecting piece 31 during movement of the stroller, the first part 33 will be moved in the direction of the second part 33, causing the spring 43 to be extended.

Figures 6A and 6B show a third embodiment of a connecting piece 51 according to the invention, which comprises a first part 14 and a second part 19. The parts 14, 19 correspond to the parts 14, 19 that are shown in figures 1-4. A compression spring 54 forming first spring means is positioned between the element 52 and the second part 19. When a force F is exerted on the connecting piece 51, the first part 14 is moved towards the second part 19, causing the spring 54 to be compressed.

Figures 7A and 7B show a fourth embodiment of the connecting piece 61 according to the invention, which comprises a first part 14 and a second part 19. The parts 14, 19 correspond to the parts 14, 19 that are shown in figures 1-4. The first part 14 is connected to the second part 19 by means of an elastically deformable plastic part 62 forming first spring means. When a force F is exerted on the connecting piece 61, the first part 14 will move towards the second part 14 under elastic deformation of the part 62.

It will be understood that when a force is exerted on the connecting pieces 31, 51, 61 in a direction opposite the direction of the force F, the first parts 32, 14 will be moved in a direction away from the second part 33, 19.

It will be apparent, therefore, that also constructions other than parallelogram-like constructions are suitable for effecting a solid connection of the first part 14 and the second part 19. It will be understood that also other first spring means may be provided between the first part 14 and the second part 19. It is also possible, of course, to use first spring means between the seat and the frame with a seat for a toddler or an infant.

Furthermore it is possible to use a spring having an adjustable spring constant, in which case an optimum spring action can be obtained in dependence on the weight.

## Claims

1. A stroller (1) comprising a frame (3) supported by wheels (2) and a seat (6) supported by the frame (3), the seat (6) is connected to the frame (3) by means of a connecting piece (5, 31, 51, 61) with first spring means (29, 43, 54, 62) being provided in the connecting piece (5, 31, 51, 61), wherein the seat (6) is movable with respect to the frame (3) against the spring force of the first spring means (29, 43, 54, 62), whilst the frame (3) is movable with respect to the wheels (2) against the spring force of second spring means, the joint effective spring constant of the first spring means (29, 43, 54, 62) between the seat (6) and the frame (3) being smaller than the joint effective spring constant of the second spring means between the frame (3) and the wheels (2), **characterized in that** the connecting piece (5, 31, 51, 61) is detachably connected to the frame (3).

2. A stroller (I) according to claim 1, **characterized in that** the seat (6) is connected to the frame (3) by means of a parallelogram-like construction, which parallelogram-like construction is capable of deformation against the spring force of the spring means (29, 43, 54, 62).

3. A stroller (1) according to claim 1 or 2, **characterized in that** the connecting piece (5, 31, 51, 61) is detachably connected to the seat (6).

4. A connecting piece (5, 31, 51, 61) suitable for a stroller (1) according to any one of the preceding claims, **characterized in that** the connecting piece (5,31_{,} 51, 61) comprises a first part (14, 32), which can be detachably connected to the seat (6), as well as a second part (19, 33), which can be detachably connected to the frame (3), which parts (14, 19; 32, 33) are movable with respect to each other against the spring force of spring means (29, 43, 54, 62).

## Patentansprüche

1. Kinderwagen (1) mit einem von Rädern (2) getragenen Rahmen (3) und einem vom Rahmen (3) getragenen Sitz (6), wobei der Sitz (6) mit dem Rahmen (3) mit Hilfe eines Verbindungsstücks (5,311 51,61) mit ersten Federmitteln (29,43_{,}54, 62), die im Verbindungsstück (5,31, 51,61) vorgesehen sind, verbunden ist, wobei der Sitz (6) bezüglich des Rahmens (3) gegen die Federkraft der ersten Federmittel (29, 43, 54, 62) bewegbar ist, während der Rahmen (3) bezüglich der Räder (2) gegen die Federkraft zweiter Federmittel bewegbar ist, wobei die gemeinsame wirksame Federkonstante der ersten Federmittel zwischen dem Sitz (6) und dem Rahmen (3) kleiner ist als die gemeinsame wirksame Federkonstante der zweiten Federmittel zwischen dem Rahmen (3) und den Rädern (2), **dadurch gekennzeichnet, dass** das Verbindungsstück (5,31, 51,61) abnehmbar mit dem Rahmen (3) verbunden ist.

2. IGnderwagen (1) nach Anspruch 1, **dadurch gekennzeichnet, dass** der Sitz (6) mit dem Rahmen (3) mit Hilfe einer parallelogrammartigen Konstruktion verbunden ist, wobei die parallelogrammartige Konstruktion gegen die Federkraft der Federmittel (29,43, 54,62) verformbar ist.

3. Kinderwagen (1) nach Anspruch 1 oder 2, **dadurch gekennzeichnet, dass** das Verbindungsstück (5,31, 51,61) abnehmbar mit dem Sitz (6) verbunden ist.

4. Verbindungsstück (5,31, 51,61), geeignet für einen Kinderwagen (1) nach einem der vorangehenden Ansprüche, **dadurch gekennzeichnet, dass** das Verbindungsstück (5,31, 51,61) sowohl einen ersten Teil (14,32), der abnehmbar mit dem Sitz (6) verbunden werden kann,als auch einen zweiten Teil (19,33), der abnehmbar mit dem Rahmen (3) verbunden werden kann, umfasst, wobei die Teile (14,19; 32,33) relativ zueinander gegen die Federkraft von Federmitteln (29,43, 54,62) bewegbar sind.

## Revendications

1. Poussette (1) comprenant un cadre (3) supporté par des roues (2) et un siège (6) supporté par le cadre (3), le siège (6) est raccordé au cadre (3) au moyen d'une pièce de raccordement (5, 31, 51, 61) avec des premiers moyens de ressorts (29, 43, 54, 62) prévus dans la pièce de raccordement (5, 31, 51, 61), dans laquelle le siège (6) est mobile par rapport au cadre (3) contre la force de ressort des premiers moyens de ressorts (29, 43, 54, 62), alors que le cadre (3) est mobile par rapport aux roues (2) contre la force de ressort de seconds moyens de ressorts, la constante de rappel effective jointe des premiers moyens de ressorts (29, 43, 54, 62) entre le siège (6) et le cadre (3) étant inférieure à la constante de rappel effective jointe des seconds moyens de ressorts entre le cadre (3) et les roues (2), **caractérisée en ce que** la pièce de raccordement (5, 31, 51, 61) est raccordée au cadre (3) de façon amovible.

2. Poussette (1) selon la revendication 1, **caractérisée en ce que** le siège (6) est raccordé au cadre (3) au moyen d'une construction en forme de parallélogramme, laquelle construction en forme de parallélogramme est capable de déformation contre la force de ressort des moyens de ressorts (29, 43, 54, 62).

3. Poussette (1) selon la revendication 1 ou 2, **caractérisée en ce que** la pièce de raccordement (5, 31, 51, 61) est raccordée au siège (6) de façon amovible.

4. Pièce de raccordement (5, 31, 51, 61) appropriée pour une poussette (1) selon une quelconque des revendications précédentes, **caractérisée en ce que** la pièce de raccordement (5, 31, 51, 61) comprend une première partie (14, 32), qui peut être raccordée au siège (6) de façon amovible, ainsi qu'une seconde partie (19, 33), qui peut être raccordée au cadre (3) de façon amovible, lesquelles parties (14, 19 ; 32, 33) sont mobiles les unes par rapport aux autres contre la force de ressort de moyens de ressorts (29, 43, 54, 62).
